# EUROPEAN PATENT APPLICATION

(11) **EP 1 671 862 A1**
(43) Date of publication of application: **21.06.2006**
(21) Application number: 04257940.9
(22) Date of filing: 18.12.2004
(51) Int. Cl.: B60T 8/00, B60T 13/26, B60T 17/22, B60T 13/36

(54) **A pneumatic closed-looped antilock pressure modulating device for pneumatic brake systems**

(71) Applicant: Washington, William Edward, Michigan 48858 (US)
(72) Inventor: Washington, William Edward, Michigan 48858 (US)
(74) Representative: Dearing-Lambert, Peter Richard

(57) **Abstract**

This invention relates to a pneumatic closed-looped antilock pressure device in a pneumatic brake system for a truck tractors, semi-trailer and buses, and a differential pressure regulator for pneumatic brake system as it pertains to pneumatic brake systems for semi-trailers, buses, trucks, and trucks/semi-trailers, singular and in multiple combinations in automotive air brake installations; and more particularly to a pressure modulating device (1) that employs a diaphragm (104), piston (6) and elastomeric member (10) with pneumatic antilock brake system functions, a means for modulating pneumatic signals, a means for oscillating pneumatic signals and a means relieve pressure internally, therewith sensing pneumatic shock wave signals, and dampening shock waves, and automatically adjusting brake actuation forces and the degree of angular rotation of the wheels in a closed-looped system without venting pressure to the atmosphere.

## Description

### BACKGROUND ART OF THE INVENTION

This invention is directed to a pneumatic brake system whose pressure reduction means is internal, being closed-looped and compensating for the multi-phase pressure differentials by sensing pneumatic signals that are inherent to all fluid based friction-type braking systems. A purpose of this invention is to show that the pneumatic signal sensing means and pneumatic signal output means of the invention is continuous, thereby the same automatically and continually adjusts the angular rotation of the wheels and these means are an improvement over a control module for a brake system for trucks and semi-trailers, and other electronic control modules. Another purpose of the invention is to demonstrate a novel approach to sensing infinite pneumatic signals within limits in a closed-looped pneumatic antilock braking system that is an improvement over all electronic antilock brake systems, and is not obvious to those who are skilled in the art of brake manufacturing. Another purpose of the invention is an improved means for detecting malfunctions by utilizing the existing fluid pressure loss system of the brake system, thereby making it unnecessary to incorporate additional electrical circuits that tax the limited output of the electrical generation system.

Pursuant to the 49 Code of Federal Regulations 571.121, the U.S. National Highway Traffic Safety Administration (NHTSA) has defined antilock brakes as follows: ‴Antilock Braking System' means a portion of a service brake system that automatically controls the degree of rotational wheel slip during braking by: (1) sensing the rate of angular rotation of the wheels, (2) transmitting signals regarding the rate of wheel angular rotation to one or more devices which interpret those signals and generate responsive controlling output signals; and (3) transmitting those signals to one or more devices which adjust brake actuating forces in response to those signals."

Furthermore, as published in 60 Federal Register 13224, the NHTSA states, "As discussed in the NPRM, the definition is sufficiently broad to permit the installation of any antilock braking system, provided that it is a "closed-looped" system that ensures feedback between what is actually happening at the tire-road surface interface and what the device is doing to respond to changes in wheel slip."

Furthermore, as published in 60 Federal Register 13227, the American Trucking Association and others commented that the definition of ABS would "preclude anything but electronic systems, thereby prohibiting mechanical systems. The NHTSA notes that this is incorrect, since the definition does not require electronics for the sensing of the wheel rotation, or transmission of wheel rotation or controlling signals. Such functions could be performed using pneumatic, hydraulic, optic or other mechanical means." Furthermore the NHTSA states, "In the case of an ABS that does not require electrical power for operation, the only mandatory electrical requirement in this rulemaking ... is for malfunction indicator lamps used to signal a problem in the ABS."

As published in 60 Federal Register 13259, the NHTSA further defines, "An ABS is a closed-looped feedback control system that, above a preset minimum speed, automatically modulates brake pressure in response to measured wheel speed performance to control the degree of wheel slip during braking and provide improved utilization of the friction available between the tires and the road."

Finally, during rulemaking, the NHTSA denied a petition by the Jenflo Company to amend the definition of ABS so as to permit open-looped systems. As cited in 60 Federal Register 63966, it states, "In previous notices, the agency discussed in extensive detail the reasons for requiring a "closed-looped" antilock system.... NHTSA's definition permits any ABS, provided that it is a closed-loop system that ensures feedback between what is actually happening at the tire-road surface interface and what the device is doing to respond to changes in wheel slip. As many brake and vehicle manufacturers commented on the September 1993 NPRM, a device that satisfies these criteria is necessary to prevent wheel lockup under a wide variety of real world conditions, thereby significantly improving safety. In contrast, a definition that permitted open-loop systems would allow systems that would not necessarily prevent wheel lockup." All electronic antilock brake systems vent air in a grip-release action during the braking cycle, thus making them "open-looped" and function only after the wheels lockup. They cannot prevent wheel lockup.

One such electronic system is the control module cited in the patent of Donald J. Erhlich et al, (Erhlich) U.S. Pat. No. 6,264,286 dated July 24, 2001, and comprises a first control line for transmitting air from a source, a second control line for transmitting air to a relay valve on a trailer, allowing air to flow there-through, and a pneumatic control module (PCM) having structure for reducing pressure from an inlet port of the PCM to an outlet port of the PCM.

The patent is for an antilock control module (ACM) connected to a first control line and has a second control line that is connected to a relay valve. The sequence of activation is the driver applies pressure to the brake pedal treadle valve that delivers a pneumatic pressure signal via the first control line to the ACM and then to a second control line that activates the relay valve and that in turn delivers fluid pressure to the air brake chambers.

The ACM employs a solenoid type device that cycles to interrupt the communication of the control line pneumatic signal by venting the fluid pressure to the atmosphere after the wheels lockup. Thus the ACM cannot prevent the wheels from locking.

The ACM contains a solenoid mechanism that cycles intermittently inducing an open-loop circuit to vent air from the control line in concert with the already present electronic control module (ECM). The ECU is also used in trucks and buses brake design. The ACM is subject to contaminants and malfunction because of this. The malfunctioning ACM will prevent the control line pneumatic signal from being communicated to the relay valve thereby preventing the relay valve from actuating.

The ACM employs the functions of solenoid devices. The solenoids periodically disrupt the flow of electricity causing an "open-loop system." The NHTSA is specific in its requirement that antilock brake systems be fully "closed-looped." The disruption of electrical flow causes the system to be "open."

The ACM solenoid functions cause a venting of the compressed fluid that actuates the brake system after the brakes lockup. The NHTSA requires the brake system to be fully closed-looped. Venting of the fluid pressure is an "after-the-fact" event; the patent is in conflict in that it claims to prevent brakes from locking up and in fact vents air after they lockup.

The ACM deliberately vents compressed air during the braking cycle. This venting of air pressure deliberately causes the pneumatic portion of the brake system to be intermittently open. The venting of the air reduces the applied pressure, interrupting the braking cycle, thereby inducing a grip-release cycle effect during braking.

The ACM grip-release cycle increases the stopping distance of the vehicle. The recovery time of fluid pressure buildup causes abrupt shock waves in the pneumatic portion of the brake system. The shock waves increase the applied pressure to induce excessive variable pressures.

The Sugarawa patent, No. 5,518,308, employs "...a method of controlling an anti-skid brake system for a vehicle having one modulator and two wheel speed sensors." This method also employs a grip release method whereby the brake system must vent air from the closed brake system causing it to be open during the braking cycle. This method attempts to divert pressure from one wheel to another via a "pressure reducing-retaining mode-pressure intensifying mode." This method still requires venting air through the designed pressure-reducing mode, via an ECU, which vents air through the modulator that is integrated therewith.

The mainstream approach to antilock brakes for pneumatic systems is to intermittently vent compressed fluid from the brake system. This approach is nothing more than a "bleeder valve" and it creates multiple problems for manufacturers and maintenance personnel. The ACM and ECU approach does not take into account the laws of physics as they pertain to objects in motion.

In the case of a truck tractor and trailer there will be an ECU for the tractor, an ECU for the trailer, with accompanying modulator valves, and an ECU or ACM for the trailer. There will also be wheel speed sensors installed on the hubs of the axles of the collective axles of the truck tractor and the trailer in tandem.

Braking is a dynamic event, beginning at the application of fluid pressure to the air chambers, and terminating when the vehicle comes to a stop or when the driver removes his foot from the brake pedal. Each stop is subjected to an infinite number of variables on the road surface and when the brake linings contact the brake drums or rotors. Therein lies the problem for electronic antilock brake systems. Electronic antilock systems are digital and must be programmed, thereby processing a limited amount of data. The causes of wheel lockup are analog in measure. A digital device cannot process the infinite amount of analog data that causes the various types of wheel lockup.

A 40 pounds per square inch application of fluid pressure on a type 30 chamber (30 square inch surface area on the internal diaphragm) with a 6 inch levered slack adjuster will generate 7,200 psi of static force at the brake lining-drum interface. Testing by the inventor shows that the wheel, rolling at 20 mph, will lockup, at pressures approaching 40 psi. According to tests of the electronic systems conducted by the NHTSA, pressures in the air chambers must exceed 100 psi in order to cause the ECU and ACM equipped systems to vent air. The static force calculation between the brake linings and the brake drum is approximately 18,000 psi. The time-weighted value to reach that pressure is approximately .6 second. The cycle time for electronic type antilock brake systems is 5 to 6 times per second. Compressed gas travels at the mach speed. The electronic antilock brake systems would have to vent more than 60% of the volume to achieve the release of the wheel lockup. The time-weighted value to achieve enough of a pressure drop to release the wheel lockup is .42 seconds. Decelerating from 60 miles per hour the vehicle will travel an additional 36.8 feet during the cycle time. Also the thermodynamically induced eccentricities on the drum contact surface circumference and the warping on the rotor surfaces cause discontinuities during the drum-lining or rotor-lining dynamic interface, thereby causing interference with consistency in the electronic antilock venting cycle. Electronic antilock brake systems cannot cycle fast enough to achieve the desired affects, thereby causing vehicle instability during the braking cycle.

All ECU and ACM electronic type antilock brake devices vent air pressure to the atmosphere to cause the release of brakes after they lockup and only at pressures above 80 psi, otherwise described as "heavy braking" in the Final Report, DOT HS 807 846. Venting of the air results in the momentary decrease in the fluid pressure within the brake system. This action is intended to release the brakes that are locked-up, and to permit the wheel to momentarily freely roll, thereby flat-spotting and skidding the tires. Also during this cycle, the brakes are momentarily not applied, thereby causing the vehicle to increase its stopping distance. This action overrides the driver control of the vehicle thus creating a continuous venting-grip-release action, or open-looped system, until the vehicle comes to a stop that is substantially greater than would occur with a non-venting or close-looped system. Pursuant to 60 Federal Register 13259, "open-looped systems" are not permitted under the 49 CFR FMVSS 571.121 regulations. The ECU and ACM approach does nothing to prevent the incidence of single-wheel lock-up that is the cause of jackknifing and the loss of vehicle stability.

The present and novel invention, being an improvement over all electronic antilock brake systems, is analog, fully closed-looped, senses the rate of angular rotation, and senses what is actually happening at the tire-road surface interface via the interfaces of the components of the braking system, the wheel and the tire, and is subject to analog pneumatic signals from opposing air chambers from a single axle. The invention compensates for the variations and shock wave signals that are generated in the air chambers and thus transmitted to the invention. The invention therein compensates for the over-pressurizations by dampening the variable pneumatic signals, reducing the fluid pressure, thereby preventing the same from passing to the opposing air chamber. The invention therein generates analog pneumatic output signals; reduced pneumatic pressures, and the same signals are transmitted to the respective opposed air chambers. These output signals automatically adjust the brake actuating forces and compensate, via the interfaces, for what is happening between the tire and the road surface, without venting air. The cycle is fully completed during the braking event. Thus the deceleration rate is constant and the wheels stop rolling at the point where the vehicle stops, thereby preventing premature wheel lockup.

The 49 CFR 571.121 Federal Motor Vehicle Safety Standards (FMVSS) specify a standard for detecting a malfunction in antilock brake systems. The standard calls for a malfunction warning light to be installed on the left rear corner of a trailer, which should be visible to the driver in the left side view mirror, and should illuminate in the event of an electrical failure. An electrical malfunction light is also required to be installed and visible to the driver in the cab of the truck.

The industry has reported that drivers have a difficult time viewing the external warning light from the cab. It has been reported in many trade publications that the external warning lights had been disabled or disconnected. Other vehicles have had the light bulbs removed. Still others have reported that one does not know if the light is to be off or on. One can continue to indefinitely operate an electronic type antilock brake system with a malfunction.

The malfunction warning lights do nothing to detect any malfunction of the computer components that are responsible for interpreting and transmitting the signals that sense angular wheel rotation. The truck, trailer and bus ECU/ACM are equally vulnerable. The State of Georgia encountered a major problem with the school buses that were equipped with electronic antilock brake systems. The ECU components were programmed with incorrect algorithms that caused delays in the delivery of fluid pressure to the air chambers. The delay in brake actuation was documented to be as long as 10 seconds. The malfunction warning lights were unable to detect the problems with the computer programming. More than 400,000 ECU's were recalled in the United States and Canada.

The present novel invention, being an improvement over all other antilock brake systems, malfunction system is redundant to improve safety. The invention is not activated by electricity, but by the fluid pressure in the brake system. The invention will sense pneumatic pressure signals as low as 5 psi. Trucks and buses normally maintain approximately 120 psi of fluid pressure in the storage tanks. This ensures that multiple brake applications can be made in the event of a malfunction of the compressor. A light that is visible to the driver will illuminate and a buzzer will sound should the pressure fall to 60 psi. The falling pressure for the truck or trailer can also be viewed by observing the stored pressure and applied pressure gauges that are mounted on the dashboard in the cab. Additionally, the emergency brake portion of the air chambers will engage, immobilizing the vehicle. This redundant malfunction system will ensure that repairs will be made before the vehicle can be moved. This is an improvement over all electronic type malfunction systems. II

In pneumatic/fluid pressure air braking systems it is customary to install a quick release valve, between the brake actuator chambers on the respective axles of buses, trucks and truck/trailer combinations.

One such quick release valve is disclosed in the patent of Stephen Vorech, U.S. Pat. No. 2,040,580 dated May 12, 1936, and comprises a flexible diaphragm which is effective to not only direct the application of compressed air to the brake actuators, but to also secure a quick release of air pressure from such chambers when the master control valve is moved to the brake release position. Another such type of valve is disclosed in the patent of Earl T. Andrews, U.S. Pat. No. 2,718,897, dated Sept. 27, 1955, and comprises a spring acting upon the diaphragm in such a manner that a pressure differential exists across the diaphragm and this feature results in somewhat slower application of fluid pressure to the brake actuators.

One such trailer brake release valve is disclosed in the patent of Joseph L. Cannella, U.S. Pat. No. 3,512,843, dated May 19, 1970, and illustrated in the same as being electrically operated and connected by a conduit to the relay valve, said relay valve being connected by conduits respectively to brake actuators.

One such apparatus for equalizing and absorbing shock is disclosed in the patent of Theodore P. Spero, U.S. Pat. No. 4,166,655 dated Sept. 4, 1979, and comprises a resilient, yieldable, shock-absorbing member contained within an elongated walled housing and bordering on one end by a top side cavity wall and on the other end by a piston whose bottom side is sealed by a diaphragm member to prevent the cavity from being contaminated by water droplets and particulates. This apparatus for equalizing pressure and absorbing shock as further disclosed in the patent is installed to one side of a quick release valve which is installed between two opposing brake actuators to prevent single wheel lock-up in a pneumatic braking system.

The device described by Vorech employs the use of a spring acting upon a diaphragm in such a manner that a pressure differential exists across the diaphragm, and this feature results in somewhat slower application of the front brakes as compared with the rear brakes and causing a lesser energization of the front brakes than that of the rear brakes. This device causes a purposeful time and application differential with the negative effect of unbalanced front-to-back braking and uneven front-to-back wear on brake components, with the back brakes wearing prematurely to the front brakes. Also, as the braking ability of the front brakes is diminished, the ideal stopping distance is increased.

The device described by Cannella is electrically activated by a switch attached to the foot pedal control valve and upon release of the foot pedal, the switch directs electrical energy through a time-delay switch and then said electrical energy is transmitted to the electrical trailer brake release valve connected to the relay valve by a conduit and releasing the fluid pressure contained within the conduit connected to the relay valve for the purpose of eliminating the sluggish exhaust of air pressure from a plurality of brake chambers. The sluggish exhaust of the plurality of brake actuators is more a result of the actuators' fluid volume being exhausted through a single relay valve exhaust port. Cannella's device also lacks the design to address the fluid pressure wave front that so readily travels through the relay valve crossing to and from opposing brake actuators and causing single wheel lock-up.

The device described by Spero, an apparatus for equalizing pressure and absorbing shock in a pneumatic braking system configured with a walled, contained, two-chamber housing having an elongated, resilient, yieldable member on the top end and a rigid piston on the bottom in the upper chamber separated by a resilient covering to prevent contamination forming a divider for a second lower chamber has been discovered to have negative effects on the brake system. It was found that as the piston is acted upon by fluid pressure, said piston deforming the elongated member and having the result of energization of said member, upon release of the fluid pressure the piston becomes a projective traveling into the second lower chamber causing physical damage to the dividing resilient member, the result being contamination of the upper chamber and inconsistent equalizing of pressure and an inability to absorb shock. Another result being the fluid pressure volume would cause the damaged divider member to enter the outlet port, clogging the conduit and preventing fluid pressure from flowing to the brake actuator. These consequences are entirely due to the piston's lack of an established point of rest.

Still another consequence of the apparatus is that its location to one side of a quick release valve lessens its ability to absorb shock occurring from the fluid pressure application density wave front that results from supersonic compressed fluid flow. The density wave front travels first through the source supply inlet port of the quick release valve where the density wave front divides, causing a shock, and travels simultaneously through opposing laterally aligned outlet ports, one to a brake actuator and the other through the apparatus and then to the opposing brake actuator. As the initial shock occurs in the quick release valve and not in the apparatus, the apparatus cannot absorb the shock and the ideal braking effectiveness is diminished.

One of the objects of the present invention, and also an improvement over the quick release valve, is the present invention's ability to utilize the destructive interference qualities of compressed fluid flow and create constructive interference conditions to eliminate single wheel lock-up by incorporating a delivery channel whose properties isolate the fluid mechanics of the quick release function from the equalizing function of the base chamber delivery system.

Another object of the present invention, and an improvement over all quick release valves, is to provide a valve of the type whose functions eliminate the degenerative effect created by the front-to-back braking time differential, as the ideal braking situation is to have balance throughout the plurality of brake actuators.

Another object is to provide a valve that is an improvement over the apparatus for equalizing pressure and absorbing shock, and having the mechanism to absorb shock of compressed fluid flow at the point of said shock and to equalize pressure simultaneously during dynamic braking cycles with the appropriate design to ensure consistent performance.

Yet another object is to provide a valve whose mechanisms provide for consistent performance, maintainability and reliability over a relatively long lifetime.

Still another object is to provide a valve whose exhaust/relief function does not cause sluggish release of fluid volume in plurality brake actuator designs but works mechanically as an integral part of the brake system design to insure quick release of fluid pressure volume between opposing actuators per axle in all vehicle axle configurations and is an improvement over the trailer brake release valve.

Still another object of the present invention is to provide a single valve whose performance exceeds those of the aforesaid patents with the improvements necessary to prevent the consequences cited of same said patents.

### BRIEF DESCRIPTION OF THE DRAWINGS

In the drawings, wherein similar reference characters refer to similar parts throughout the several views:
FIG. 1 is a diagrammatic view of a typical fluid pressure vehicle braking system for truck/semi-trailers having the novel differential pressure regulator quick release valve of the invention incorporated therein;
FIG. 2 is a detailed sectional view of the differential pressure regulator quick release valve.
FIG. 3 is an external front view of the differential pressure regulator quick release valve.
FIG. 4 is an external side view of the differential pressure regulator quick release valve.
FIG. 5 is a topical view of the quick release cover plate.
FIG. 6 is a diagrammatic sectional view of the upper cylinder housing.
FIG. 7 is a topical internal view of the upper cylinder housing.
FIG. 8 is a topical external view of the differential pressure regulator valve.
FIG. 9 is the differential pressure regulator valve in its operating position on the typical braking axle.
FIG. 10 is a topical view of the retaining ring.

### DETAILED DESCRIPTION

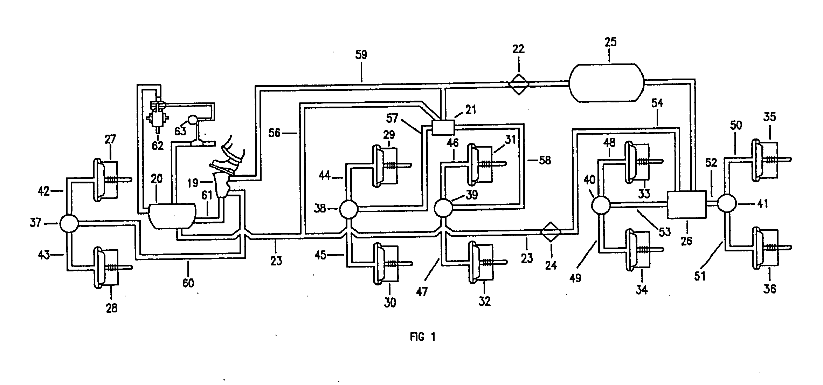

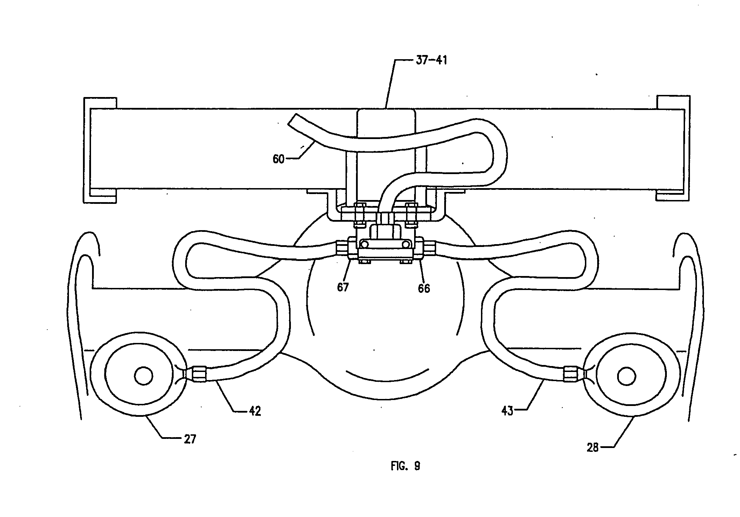

Referring more particularly to FIG. 1, the novel differential pressure regulator quick release valves of the present invention are illustrated therein in connection with a pneumatic fluid pressure vehicle braking system. Said braking system includes; a truck reservoir **20** supplied by a conventional compressor **62,** a conventional governor 63 employed for controlling the operation of the compressor **62** in accordance with the pressure of the air within the reservoir **20,** a reservoir **25** for the trailer, a treadle valve **19,** opposing brake actuator chambers **27** and **28** (FIG. 9), **29** and **30, 31** and 32, 33 and 24, 35 and 36, a conventional relay valve 21, an emergency relay valve **26,** glad hands **22** and **24** connecting the trailer/truck air brake systems. Also shown in FIG. 1 are the conduits **60, 57, 58, 52** and **53,** whose purpose is to direct fluid pressure to the invention **37, 38, 39, 40,** and **41** of the patent, and are interposed respectively between opposing brake actuators **27-36,** and connected by conduits **42-51** for the purpose of directing the application of fluid pressure to and its exhaust from said brake actuators **27** and **28, 29** and **30, 31** and **32, 33** and **34, 35** and **36** in a manner that will appear more fully hereinafter.

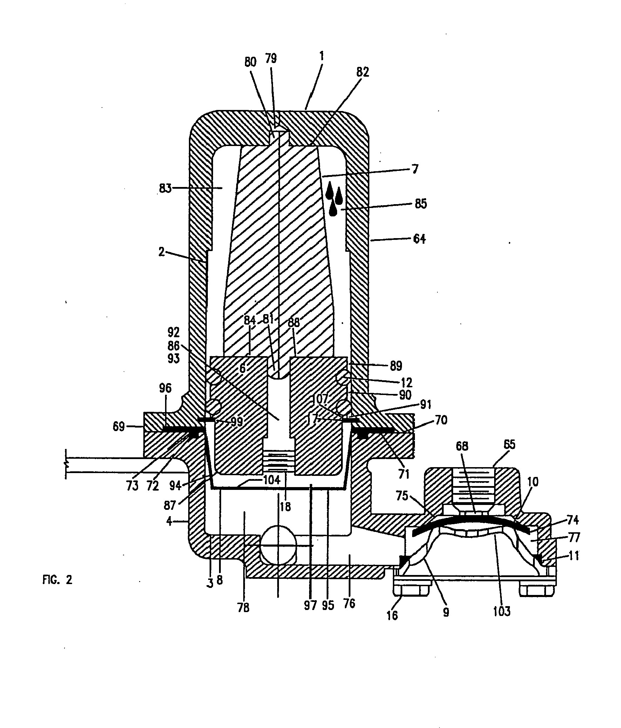

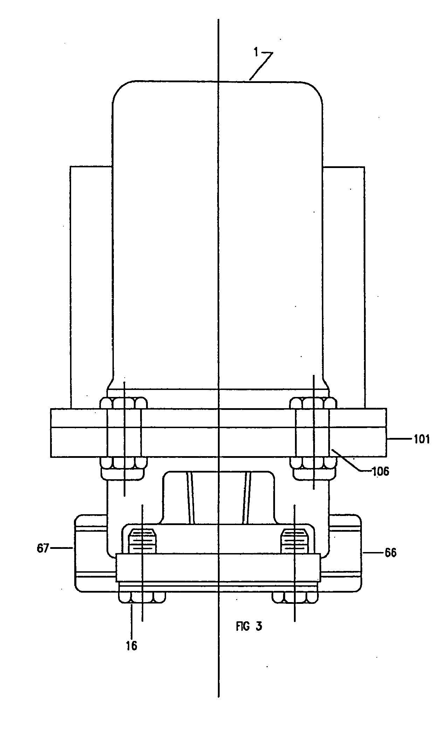

As shown in FIG. 2 the invention **64** includes a lower chamber base housing 4 having a protruded vertical inlet port **65** connected by conduits, **60, 57, 58, 52** and **53** and two laterally aligned outlet ports **66** and **67** shown in FIG. 3 and FIG. 9, said outlet ports respectively connected to opposing brake actuators **27-36** by conduits **42-51.** The base housing **4** whose composition of cast aluminum having density to maintain minimum of 150 psi for 60 seconds and has an inlet port **65** and machined diaphragm support **68** which is a safety screen to maintain position of the flexible quick release diaphragm **10** and having a stamped rigid quick release cover **9** for the purpose of exhausting the fluid pressure into the atmosphere. The flange upper wall **69** includes an upper surface **71** that is machined to mate with the corresponding surface of the cylinder housing flange wall surface **70** of the upper cylinder housing **1** having the same properties as the base housing **4** and said cylinder housing **1** that has an annular counterbore 73 therein for receiving the lip **73** of the covering base diaphragm **8** in a manner as will later be described in detail.

In order to insure a long life of the valve **64** and secure uniform action, the quick release diaphragm **10** is made of a suitable flexible material such as reinforced rubber or rubber composition and is free of any initial flexure or stress. The boundary edge **74** of the diaphragm **10** is resiliently maintained in engagement with inner surface seat **75** and thus controls communications between an inlet port **65** and a ported delivery channel **76.** A cavity **77** whose diameter is machined sufficient to allow the unobstructed flexure of the quick release diaphragm **10** and whose other larger diameter is sized for the insertion of a square seal ring **11** to prevent fluid pressure seepage around the contact surface of the quick release cover **9** also having a formed concavity and is fastened to the base **4** by four locking screws **16,** shown in FIG. 2 and FIG. 3, to secure the cover **9** to the base **4** is contained in the base housing protrusion. Thus in the normal position of the parts, the quick release cover **9** secured into the concavity **77** and maintaining the position of the seal ring **11** is fixing the location of the quick release diaphragm **10** between itself and the inner cavity surface seat **75** having the machined integral diaphragm screen support **68** at the opening from the inlet port **65** and allowing for the unrestricted communication of fluid pressure between the inlet port **65** and the delivery channel **76** and the outlet ports **66** and **67** to the brake actuators **27-36.**

The upper walled cylinder housing **1** has an inner cylinder machined surface **2,** a button bore **79,** for receiving the top end button **80** of the tapered frustoconical formed shock absorber **7** having a button **81** axially aligned with the button **80** in centrally oriented positions and seated against the inner cylinder top wall **82.** This is to maintain uniformity of space around the member **7.** The member 7 is comprised of appropriate resilient elastomeric compounds and serves to compress moving axially and deform filling the upper chamber **83** when a force is applied to its face **84** thus energizing and reshaping to its original form at termination of said force. The shock absorber 7 is formulated to a predetermined hardness sufficient to maintain energization relative to the pressure differentials existing during the fluid pressure application.

Eight cc's of 10 weight non-detergent hydraulic oil **85** is dispensed inside the upper cylinder housing **1** for the purpose of aiding the shock dampening process and whose composition and operation is such that it exceeds the ambient temperature ranges to which brake systems are subjected. The piston **6** has a centerbore **86** through the vertical center axis and is threaded through the bottom end horizontal portion face **87** to receive a hex socket screw **18** and being generally solid and having a top end horizontal face **88** to receive the shock absorber button **81** in the centerbore **86** with a piston wall surface **89,** two counterbores **92** and **93** of a curved nature in the piston wall **89** and separated by two intermediate flange portions **90** and **91** having identical dimensions and whose diameter is slightly less than that of the inner cylinder surface **2** to insure a snug fit of the piston **6** is disposed in the cylinder **83.**

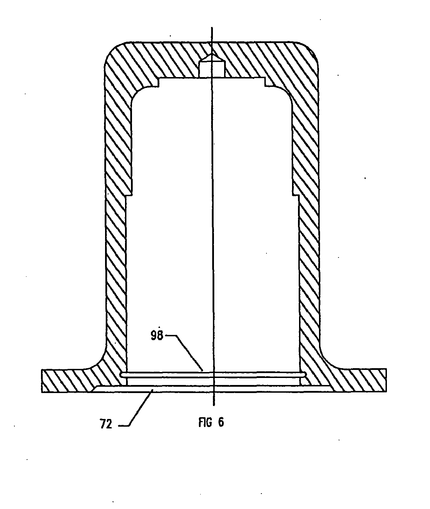

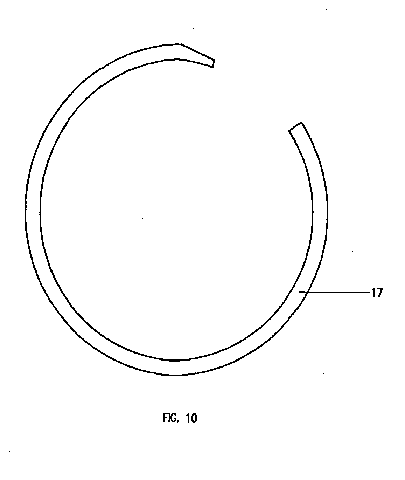

A retaining ring **17** is inserted into a grooved track shown in FIG. 6 in the cylinder inner surface **2** making contact, without pressure, to the underside lip **99** of the piston bottom flange **107.** The retaining ring **17** shown in FIG. 10 establishes the piston's **6** position of rest to insure consistent reactions to differential fluid pressures. An O-ring **12** is dispensed in each of the counterbores **92** and **93** and serves to form an airtight seal between the piston **6** and the cylinder surface **2** and also serves to roll axially within the counterbores **92** and **93** when a fluid pressure force is present. A quantity of oil **97** is spread over the end portion of the face 87 of the piston **6** and serves as lubrication for the base diaphragm's **8** inner surface **104** during fluid pressurization.

The base diaphragm **8** is comprised of a resilient elastomeric material impervious to winterizing alcohol and maintaining its function to pressures of 1000 psi and has a shape suitable to covering the piston **6** with a minimum clearance between the respective ports **66** and **67** without making contact with the piston **6.** The base diaphragm **8** has a flared side wall **94,** and end wall **95,** and an annular flange **96** having an annular lip **73** that engages the counterbore **72** that serves to seal airtight the piston **6,** shock absorber 7 and the oil **85** of the upper chamber **83** from the contaminants or particulates contained within the fluid pressure transmitted through the lower chamber **78.**

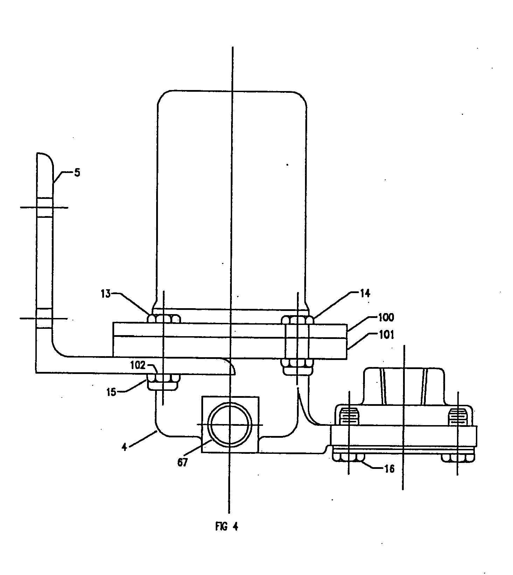

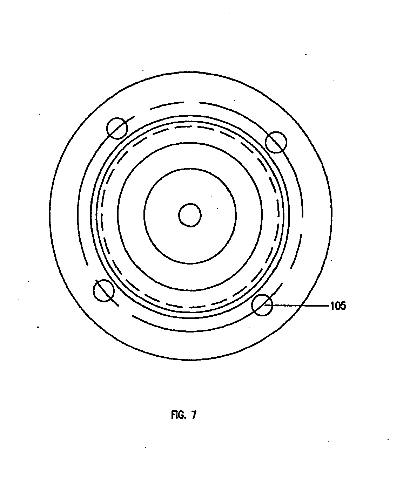

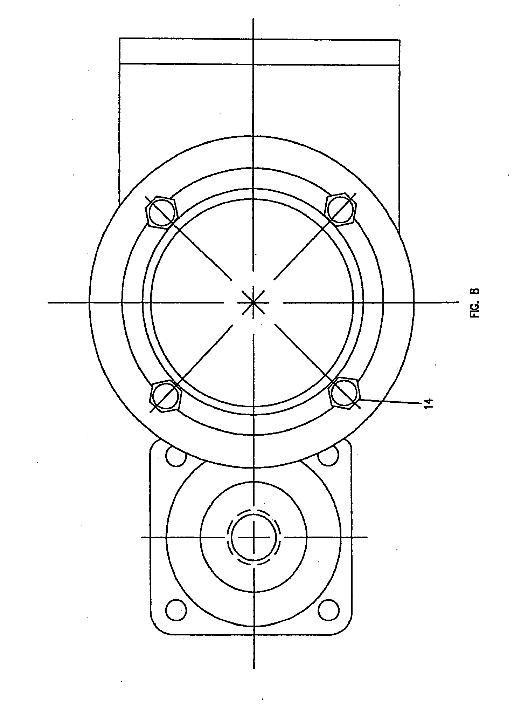

FIG. 3 shows the assembled invention having the upper cylinder housing **1** with four openings **105** shown in FIG. 7 through its flange **100** shown in FIG.4 that is axially aligned with four openings **106** shown in FIG. 3 through the base housing's flange **101,** a 90-degree angle shaped bracket 5 in FIG. 4 having two openings through its horizontal side **102** for aligning with two respective openings of the base housing flange **101** and the upper housing flange **100** and four self-locking type bolts **13** and **14** shown in FIG. 8 and FIG. 4 extending through the said axially aligned openings and fastened with nylon inserted lock nuts **15** securing the bracket **5** to the base housing flange **101** and the same to the upper cylinder housing flange **100.**

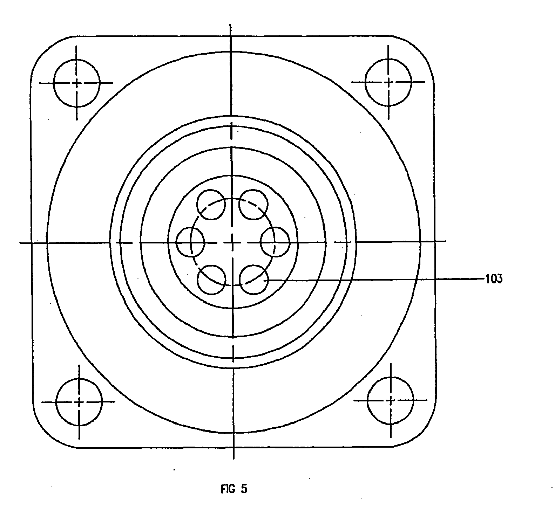

The operation of the valve of the invention will be readily understood in the foregoing description. It is understood that the parts of the brake system as shown in FIG. 1 maintain a non-energized position. As the treadle valve **19** is activated, fluid pressure having a pressure differential wave front travels simultaneously to the inlet ports **65** of the inventions **37-41** via conduits **60, 57, 58, 53** and **52.** In FIG. 2 as the wave front passes through the diaphragm support screen **68** it is dispersed uniformly over the face of the quick release diaphragm **10** which is the point of fluid pressure shock for each individual braking axle having the effect of causing an increasing pressure differential acting on the flexible quick release diaphragm **10** and the quick release diaphragm **10** forming to the convexity of the quick release cover **9** to seal the cover's exhaust ports **103** as shown in FIG. 5, thereby interrupting communication with the atmosphere. The fluid pressure wave front shock passes through the base protrusion cavity 77 where it is transmitted through the delivery channel **76** and centralizing the wave front shock in the cavity of the base chamber **78** where it depresses the base diaphragm **8** against the piston face **87** depressing the piston **6** axially and energizing the shock absorber member **7.** Thus the shock that occurs from the fluid pressure wave front is absorbed therein, and the fluid pressure is thereby instantaneously equalized before it is transmitted to the laterally aligned outlet ports **66** and 67 shown in FIG. 3, FIG. 4 and FIG. 9 and through the conduits **42-51** to the brake actuators **27-36** (see FIG. 9). The delivery channel **76** in FIG. 2 as designed in the valve of the patent is the only method by which the differentials that occur in quick release valves can be isolated from the delivery fluid pressure to the brake actuators.

By instrumenting brake actuators with fluid pressure testing devices it can be demonstrated that momentary fluid pressure differentials occur during the dynamic braking process. These differentials are pneumatic shock wave signals. As is well known in the art of brake assemblies (not illustrated) the brake actuator has a push rod attached on one end to a rigid metal plate having a resilient diaphragm member that serves to open as a chamber when fluid pressure is applied. The push rod's opposing end is attached to slack adjuster attached to a cam shaft having an "S" cam design on its other end and serving as a type of fulcrum point for gaining mechanical advantage causing brake shoes to make contact with the rotating brake drum. Inherent in all brake drums are high spots and low spots. During braking, the brake shoes track the drum making contact with the high spots and dropping off to the low spots causing a rocking effect of the "S" cam and in turn causing a back-and-forth jolting of the push rod and thus causing repressurizations of the fluid pressure in the brake actuator. These repressurizations are reflected directly back to the base chamber **78** in FIG. 2 in the invention of the patent. As described in the Spero patent, the reflected actuator pressure differentials from the actuator attached to the standard quick release valve must pass through the standard quick release valve encountering the pressure differentials that exist on the diaphragm within said release valve. It has been noted in the study of Fluid Dynamics that such encounters by opposing differential fluid pressure masses may cause a "dead air" effect or destructive interference and can momentarily prevent the apparatus of the Spero patent from being effective. The design of the differential pressure regulator quick release valve eliminates said encounters as the fluid repressurizations from the actuators do not encounter the pressure differential existing on the diaphragm **10** in FIG. 2 but rather is reflected into the base chamber **78** and absorbed, equalized, and redistributed simultaneously in the same manner as the fluid pressure wave front.

Upon release of the treadle valve **19,** it will be readily understood that the fluid pressure differential acting on the diaphragm **10** will be reduced to ambient atmospheric pressure having the effect of relieving the quick release diaphragm's **10** sealing effect on the quick release cover's exhaust ports **103.** The higher fluid pressures existing within the invention, the conduits **42-51,** and the actuators **27-36** will form the diaphragm **10** against the diaphragm support **68** and the inner surface **75,** opening communication with the atmosphere through the cover plate exhaust ports **103** and exhausting the fluid pressure to the atmosphere and thus de-energizing and reforming the shock absorber **7** to its original frustoconical shape and simultaneously returning the piston **6** to the established position of rest against the retaining ring **17** in FIG. 10 to assure like performance during the next braking cycle. The diaphragm **10** will return to its position of non-flexure (rest) when the said pressure drops to atmospheric pressure.

The Spero apparatus U.S. Pat. No. 4,166,655 is used in conjunction with any of the quick release valves of Horowitz, U.S. Pat. No. 3,093,153, Vorech, U.S. Pat. No. 2,040,580, or Andrews, U.S. Pat. No. 2,718,897, and due to the effects of "isentropic and adiabatic flow" through the various quick release valves and their inherent pressure differentials, there will always exist a calculable imbalance in fluid pressure to the air actuators.

While the invention has been particularly illustrated herein and described with considered preferred detail, it will be readily accepted by those skilled in the art such that various alterations of the embodiments of this invention may be made without departing from the spirit of the invention. Be it known that the embodiments of this invention, alterations and modifications falling within the scope of the invention are covered by the claims that follow.

## Claims

1. A differential pressure regulator quick release valve for fluid pressure brake systems having an integral design subject to fluid pressure differentials, contaminants and particulates, having disposed therein a retaining ring, a rigid piston and an elongated, resilient, yieldable, shock absorbing member disposed on a first face of said piston in a walled cylinder and chamber associated therewith said retaining ring disposed for boundary means on a second flange face of said piston and whose function is for consistent, like dampening reactions at a conclusion of compression of said shock absorbing member and said member being returned to an original configuration and said boundary means restricting travel of said piston to a position in said cylinder at completion of depressurization, said cylinder having oil dispersed therein; and as said valve receives fluid pressure having said pressure differentials being delivered to a delivery channel thereof having centralizing means via a housing with a protrusion, an inlet port and said protrusion having a first diaphragm means disposed therein to interrupt communication with cover plate of said protrusion having exhaust ports and said delivery channel centralizing and isolating said fluid pressures and pressure differentials in a base chamber having laterally aligned outlet ports and pressurizations acting on a flexible covering having an inner face and an outer face for acting on said piston's second face and said piston being restricted by said boundary means and said covering having a continuous peripheral portion extending from second diaphragm means thereof, an outer surface of said second means forces an inner surface thereof into contact with a second end such that pressure is transmitted to said piston causing said piston to deform said member into a cylinder housing and delivering pressure directly from a base housing chamber to said outlet ports.

2. A differential pressure regulator quick release valve for fluid pressure brakes systems as recited in claim 1 wherein said base housing having said inlet port which is protruding and said axially aligned exhaust ports and disposed therebetween first means having fluid pressure delivered upon said first means and said first interrupting communication between said protruding inlet port and said laterally aligned outlet ports and allowing for unobstructed pressure differential shock to act upon said first means and said shock being freely delivered directly via said isolating and centralizing means, into said base chamber and said shock acting upon said second diaphragm means transmitting said shock to said rigid piston having dampening means at a position of rest at said boundary means and deforming and energizing said elongated shock absorbing member therein said cylinder chamber and said fluid pressure being delivered through said laterally aligned outlet ports via said conduits to brake actuators and hence pressure differentials generated by said actuators being transmitted via conduits and said outlet ports to said base chamber and acting upon said second means, said actuator pressure differential shocks being dampened as said second means contacts said dampening means and equalized by said energized deformed elongated member and simultaneously redistributed freely having no interference from said pressure differential at said first means.

3. A differential pressure regulator quick release valve for fluid pressure brake systems as recited in claim 1 having an integral design that is subject to fluid pressure differentials, contaminants and particulates, wherein said boundary means establishes a point of rest of said rigid piston at said completion or conclusion of depressurization, said piston having fluid pressure dampening means, and said boundary means preventing destruction of said second diaphragm means.

4. A differential pressure regulator quick release valve for fluid pressure brake systems as recited in claim 3 wherein said cylinder housing and said base housing with said protrusion having aligned said inlet and exhaust ports, being disposed therein and separated by first means and having isolating and centralizing means, a base chamber, and laterally extending outlet ports, said base chamber being separated from said upper cylinder chamber by a second means and having disposed therein said cylinder chamber, said boundary means, said dampening means, said O-rings, said energized elongated member, said oil, and said first means engaging diaphragm support of said inlet port interrupting communications with said inlet port, said isolating and centralizing means, said base chamber, and said outlet ports so that fluid pressure application contained within said valve, conduits and brake actuators and said fluid pressure reducing to ambient atmospheric pressure through said exhaust ports simultaneously de-energizing said elongated member re-establishing said dampening means at contact with said boundary means.

5. A differential pressure regulator quick release valve for fluid pressure brake systems having an integral design that is subject to fluid pressure differentials, contaminants and particulates as recited in claim 1, wherein said delivery channel having centralizing means for said fluid pressure and pressure differentials delivers the same to an outer surface of said base housing chamber and pressures being dampened by said second diaphragm means contacting and delivering pressure to said dampening means.

6. A differential pressure regulator quick release valve for fluid pressure brake systems as recited in claim 1 means is disposed in a concavity of said protrusion housing controls communication between said inlet port and said isolating and centralizing means and for controlling communication between said outlet ports and said isolating and centralizing means and said cover plate's exhaust ports and being imperforate and a diameter portion positioned to interrupt communication between said inlet port and said outlet ports, said outlet ports being connected to opposing brake actuators.

7. A differential pressure regulator quick release valve for fluid pressure brake systems as recited in claim 6 wherein means for interrupting communication with said outlet ports, said isolating and centralizing means and said exhaust ports and for freely delivering fluid pressure through said isolating and centralizing means to said base chamber wherein a pressure wave front shock is centralized within said base chamber and thereby delivering fluid pressure through said outlet ports via conduits to said brake actuators therein returning pressure differentials caused by said brake actuators via conduits and said outlets to said base chamber, said actuator caused differentials being freely dampened by said second diaphragm means pressurizing dampening means.

8. A differential pressure regulator quick release valve for fluid pressure brake systems as recited in claim 6 wherein said second means has an outer surface and having a periphery disposed in an end face of said base housing and a cylinder housing face and whose composition withstands pressures upwards of 1000 psi and outer and inner surfaces being free of rigid bondings eliminating corrosion fragments and enhancing life of said second means.

9. A differential pressure regulator quick release valve for fluid pressure brake systems as recited in claim 6 wherein means for interposition or interposing in said protrusion between said inlet port and said exhaust ports.

10. A differential pressure regulator quick release valve for fluid pressure brake systems as recited in claim 6 therewith a base housing protrusion quick release cover plate that is axially aligned with said inlet port and having means interposed therein and said quick release cover plate having exhaust ports and being fastened to a concavity of said base housing and having a seal ring disposed therein.

11. A differential pressure regulator quick release valve for fluid pressure brake systems as recited in claim 1 wherein said isolating and centralizing means delivers fluid pressure directly to said base chamber of said base housing wherein said fluid pressure and pressure differentials transmit said pressure to said outer surface of said second diaphragm means forcing its said inner surface to make contact with said dampening means that is bounded on a second end flange thereof by said boundary means fixing a position of rest of said dampening means and forcing the same to deform said elongated member into cylinder housing.

12. A differential pressure regulator quick release valve for fluid pressure brake systems as recited in claim 6 wherein an upper cylinder housing has disposed therein said elongated shock absorbing member, said oil, and dampening means having two O-rings disposed in respective semi-circular counterbores containing said oil within upper cylinder chamber and a non-energized position of said dampening means being established by said boundary means thus having consistent reactions to fluid pressure and preventing destruction of said second diaphragm means.

13. A differential pressure regulator quick release valve for fluid pressure brake systems as recited in claim 1, said valve has an integrally determined relationship in a plurality of brake actuators having said inlet port which is protruding connected by a conduit to a relay valve outlet port and said outlet port supplying fluid pressure via a conduit to said inlet port and said first diaphragm means interrupting communication between said laterally placed outlet ports, said isolating and centralizing means, said exhaust port and said first means communicating said fluid pressure through said centralizing means to said outlet ports via conduits to two said brake actuators which are opposing and upon reduction of fluid pressure to ambient atmospheric pressure first means to interrupt communication between said inlet port and said laterally placed outlet ports and permitting fluid pressure volumes within said opposed actuators, said conduits and said base chamber to rapidly simultaneously reduce fluid volume to ambient atmospheric pressure through said exhaust port of said valve.

14. A differential pressure regulator quick release valve for fluid pressure brake systems as recited in claim 1 wherein said valve has isolating and centralizing means for directing fluid pressure shock to base chamber.

15. A differential pressure regulator quick release valve for fluid pressure brake systems as recited in claim 1 wherein said upper cylinder has said boundary means establishing a point of rest of said dampening means.

16. A differential pressure regulator quick release valve for fluid pressure brake systems as recited in claim 1 oil being disposed in an upper cylinder chamber of said cylinder housing and oil having a minimal compressibility and said cylinder chamber having an amount of ambient air disposed therein, and said elongated member in an energized state being deformed into said cylinder chamber and oil becoming aerated oil gaining compressibility and being essential to absorbing shock from fluid pressures acting upon said second means and said dampening means.

17. A differential pressure regulator quick release valve as cited in Claim 1, 2, 3, 4, 5, 6, 8, 10, 11, 12, 13, 14, 16 and being a pneumatic closed-looped antilock pressure-modulating device for pneumatic brake systems, as cited in said claims, having an integral design and installed to receive delivery fluid pressure from a relay valve via an inlet port and a delivery channel and delivering said fluid pressure to opposing air chambers on a single axle via a delivery channel to a base chamber, said pressure flowing through opposing outlet ports via conduits that are connected to opposing air chambers, said chambers receiving said fluid pressure and filling said air chambers, thereby creating mechanical leverage and advantage via a push rod whose opposing end is attached to a slack adjuster, said slack adjuster having an interface via a worm gear in an opposing end whose gear teeth interface with the splined end a of cam shaft whose opposing end is formed in the shape of an "s", said "s" cam thus contacting the rollers of two drum brake shoes, said shoes being semi-elliptical with an end being hinged and an end having a roller, said "s" cam being located between said rollers of said brake shoes, said "s" cam shaft then having torque and rotating to opposing points of contact with said rollers, thereby having adjacent points of contact and direct interface with said brake shoes and said brake shoes having friction material that is riveted to the outer circumference for contact with a rotating circular brake drum to create an interface with friction coefficient, said lining and drum interface being between different geometries therewith a wheel and a tire attached to the brake drum, said tire interfacing with a road surface whose interface variations from a multi-variable surface is transmitted via the collective interfaces of the tire, wheel, friction material, brake shoe, rollers, "s" cam, slack adjuster, push rod, air chamber and fluid pressure, said variations or input causing analog pneumatic shock wave signals to transit through the compressed fluid interface in the opposing air chambers and the attached conduits at variable speeds, said signals exceeding the mach speed, said signals being infinitely variable between limits, and said signals being sensed at the base diaphragm, said base diaphragm having an interface with a piston, said piston having an interface with an elongated elastomeric member, said elastomeric member having an interface on the opposing end with the rigid cylinder surface, the ambient air whose contained pressure is sea level, and 2 ounces of hydraulic oil contained therein, said variable analog fluid pressures being modulated by compressing the base diaphragm, the piston, the elongated elastomeric member, the ambient air and the hydraulic oil, whose action dampens the said infinitely variable signals therewith the output being adjusting brake actuating forces thereby relieving the pressures at the friction material-brake drum interface thereby controlling the degree of wheel angular rotation without venting fluid pressure to the atmosphere.

18. A pneumatic closed looped pressure-modulating device for pneumatic brake systems as cited in claim 17 said brake assembly having an air actuated caliper, said caliper having an air chamber with ability to clamp, and shoes or pads having friction material bonded thereto and or riveted to the inner surfaces of two opposing surfaces and disposed to become directly adjacent to a rotating rotor spinning there between, said friction material contacting the outer surfaces of a rotor that is mounted on a spindle, said spindle being attached to the opposing hubs of the axle, and said rotor being attached to a wheel and a tire, and said caliper being actuated with fluid pressure to cause said caliper to clamp about the surfaces of said rotor and said interface generating analog pneumatic signals in a the air chamber of said caliper and said chamber transmitting said variable signals of the tire and road surface interface, via the collective interfaces of said tire, rotor, caliper and friction material, said analog variations being input that is transmitted via the pneumatic fluid pressure signals from the caliper air chamber via conduits to the base diaphragm, whereby said diaphragm interfaces with said piston, elongated membrane and said hydraulic oil, therein interpreting said analog pneumatic signals and said output means directly transmitting said signals from the cylinder diaphragm back to said caliper air chamber, thereby adjusting the actuating forces of said caliper-friction material interface and automatically controlling the rate of angular rotation of said wheel.

19. A pneumatic closed-looped antilock pressure-modulating device as recited in claim 1, 2, 3, 4, 5, 6, 7, 8, 10, 11, 12, 13, 14, 17 and 18 wherein said base diaphragm senses analog pneumatic signals whose variations are generated by the angular rotation and interface of the road surface, said pneumatic signals being transmitted through the interfaces of said brake components and said pressurized fluid, said fluid having an interface with said opposing air chamber and said cylinder diaphragm, said diaphragm receiving said pneumatic signals at the rate of angular rotation of said wheels, said cylinder diaphragm, therewith said piston, said elongated member and said hydraulic oil thereby interpreting and modulating said analog pneumatic signals and transmitting dampened output signals that adjust the actuating forces of the compressed fluid pressures in said air chambers thereby controlling the degree of the rate of angular rotation of said wheels.

20. A pneumatic closed-looped antilock pressure-modulating device for pneumatic brake systems as cited in claims 1, 2, 3, 4, 5, 6, 7, 8, 10, 11, 12, 13, 14, 16, 17, 18 and 19 whereby the rate of angular rotation of said wheels is automatically transmitted to a base diaphragm via conduits that are integrally attached to opposing inlet ports and said signals being transmitted from the air chamber to the fluid pressure in the base chamber and said fluid pressure interface between said fluid pressure and said cylinder diaphragm is the conductor for said pneumatic signals thereby directly adjusting said actuating forces within said air chamber, said transmission of said signals are adjusted in a closed-looped system between said air chamber and said cylinder diaphragm without venting air to the atmosphere.

21. A pneumatic closed-looped antilock pressure-modulating device for pneumatic brake systems as cited in claims 1, 2, 3, 4, 5, 6, 7, 8, 10, 11, 12, 13, 14, 16, 17, 18 and 20 wherein pneumatic signals that are generated by the interface between said brake friction material and said brake drum are transmitted from the air chamber, said pneumatic signals having a wave transmission speed greater than mach speed and said base diaphragm transmitting pneumatic signals less than mach speed therein a closed-looped system and thus automatically controlling the rate of angular rotation of the wheels at opposing end of a single axle.

22. A pneumatic closed-looped antilock pressure-modulating device for pneumatic brake systems, as cited in claims 1, 17, 18, 19 and 20 wherein said air chambers have a service brake chamber and an adjacent emergency brake chamber, said emergency brake chamber being spring actuated when pneumatic pressure reduces to 30 psi from 120 psi, said 30 psi pressure releasing said spring in said emergency brake chamber thereby actuating the brake interface between said friction material and said brake drum thereby stopping the vehicle in the event of a malfunction or compromise of said closed-looped system.

23. A pneumatic closed-looped antilock pressure-modulating device for pneumatic brake systems, as cited in claims 1, 17, 18, 19, 21 and 22 whereby said air brake chamber for said fluid pressure dropping from 120 psi to 60 psi automatically actuates a malfunction warning light signal, a buzzer and pressure gauges in the cab of the tractor, bus or truck vehicle, said signal being instantly visible and audible to the driver of the vehicle thereby alerting the driver to a possible malfunction of the closed-looped system, said warning being made to permit the driver to voluntarily stop the vehicle before said emergency brake chamber mechanism renders said vehicle immobile, such that repairs can be made to said closed-looped system.

24. A pneumatic closed-looped antilock pressure-modulating device for pneumatic brake systems as cited in claims 1, 2, 3, 4, 5, 6, 7, 8, 10, 11, 12, 13, 14, 16, 17, 18, 19, and 20 whereby said brake drums and said rotors have surface imperfections and eccentricities, and braking cycle events being dynamic, said friction materials contacting said brake drum or rotor alternating through a series of phase shifts, said surfaces having micro fissures and variable friction surfaces, and said friction interface generating heat and material expansion, said expansions, eccentricities and variations creating variable analog pneumatic signals during the dynamic braking cycle, and said signals being transmitted in a closed-looped system to said base diaphragm, piston, elongated member and oil disposed therein, therewith modulating and oscillating said signals, said modulated signals thereby being transmitted to said air chamber or said caliper air chamber, thereby controlling the rate of angular rotation of said wheels.

25. A pneumatic closed-looped antilock pressure modulating device as cited in Claims 1, 2, 3, 4, 5, 6, 7, 8, 10, 11, 12, 13, 14, 16, 17, 18 and 24 whereby said interface between said brake drum or rotor, and friction material is subject to dynamic contact between said brake drum or rotor that is rotating, and said friction material whose position is fixed at the interface contact moment, said interface having momentum and being dynamic, eccentric and shifting in phase, said phase shift being transmitted to the air chambers, and said chambers transmitting variable analog pneumatic output wave signals to said base diaphragm, and said diaphragm sensing said analog signals, therewith said diaphragm, said piston, said elongated membrane and said oil generating output signals to adjust the actuating forces of the fluid pressure in said air chambers via conduits and said transmissions being made in a fully closed-looped system.
